# EUROPEAN PATENT APPLICATION

(11) **EP 4 703 606 A1**
(43) Date of publication of application: **04.03.2026**
(21) Application number: 24196764.5
(22) Date of filing: 27.08.2024
(51) Int. Cl.: F16H 61/02, F16H 61/70, F16H 61/08

(54) **ISSUING TRANSMISSION SHIFT PREPARATION INFORMATION**

(71) Applicant: Volvo Truck Corporation, 405 08 Göteborg (SE)
(72) Inventor: WINBLAD, Hanna, 433 62 Sävedalen (SE); KARPENMAN, Fredrik, 421 47 Västra Fröunda (SE)
(74) Representative: Valea AB

(57) **Abstract**

A computer system (700) comprising processing circuitry (702) configured to issue information to a vehicle (1) comprising a transmission (2) is provided. The processing circuitry (702) is configured to receive a request for a transmission ratio shift operation indicative of a selected transmission ratio. The processing circuitry (702) is configured to issue information indicative of that the vehicle (1) should assume a transmission ratio engagement enabling condition in which engagement of the selected transmission ratio is enabled but remaining disengaged. The processing circuitry (702) is configured to select a target transmission ratio based on the selected transmission ratio and second requests for transmission ratio shift operations received during a time range after the issuance of the information. The processing circuitry (702) is configured to, after the time range, issue engagement information to the vehicle (1) to engage the target transmission ratio.

## Description

### TECHNICAL FIELD

The disclosure relates generally to transmissions. In particular aspects, the disclosure relates to issuing transmission shift preparation information such as to indicate that a vehicle shall assume a condition where a transmission ratio is enabled but disengaged. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Transmissions for vehicles such as Automated Mechanical Transmissions (AMT) can often be controlled manually by a driver through various input such as button triggers. However, if the driver makes multiple inputs, either as to trigger a shift up or down several steps, or as to correct earlier inputs, then the vehicle may perform transmission operations unnecessarily in view of a final transmission ratio desired to be assumed by the vehicle. These unnecessary operations, such as setting split gears, will take time and thereby assuming the final transmission ratio may be prolonged. A delay in performing transmission operations means that controlling the vehicle is suboptimal. Hence, there is a need for more efficient vehicle control with respect to performing transmission ratio shift operations.

### SUMMARY

According to a first aspect of the disclosure, a computer system comprising processing circuitry configured to issue information to a vehicle is provided. The vehicle comprises a transmission adapted to assume each one of a plurality of different transmission ratios.

The processing circuitry is configured to receive a first request for a transmission ratio shift operation indicative of a selected transmission ratio.

The processing circuitry is configured to issue transmission ratio shift preparation information to the vehicle indicative of that the vehicle should assume a transmission ratio engagement enabling condition in which engagement of the selected transmission ratio is enabled but wherein the selected transmission ratio remains disengaged.

The processing circuitry is configured to select a target transmission ratio on the basis of the selected transmission ratio and any set of second requests for a transmission ratio shift operation received during a transmission ratio shift request time range after the issuance of the transmission ratio shift preparation information.

The processing circuitry is configured to, after the transmission ratio shift request time range, issue transmission ratio engagement information to the vehicle to engage the target transmission ratio.

The first aspect of the disclosure may seek to improve vehicle control with respect to performing transmission ratio shift operations.

A technical benefit may include engaging the target transmission ratio in reduced time as compared to not issuing the transmission ratio shift preparation information or as compared to performing each transmission ratio shift request in full. By virtue of issuing of the transmission ratio shift preparation information, the vehicle can prepare the transmission to engage a transmission ratio, in particular the selected transmission ratio, but to defer engagement of a transmission ratio until the target transmission ratio is selected after the transmission ratio shift request time range, during which one or more of second requests may be received, before issuing the transmission ratio engagement information. This means that when the vehicle is engaging the target transmission ratio, operations for assuming the enabling condition have already been performed or at least initiated, thereby reducing any time spent on the engaging the target transmission ratio.

Since the target transmission ratio can be engaged in reduced time, vehicle control is improved as the transmission ratio can quickly be set in view of an upcoming operational scenario of the vehicle.

Optionally in some examples, including in at least one preferred example, the processing circuitry further is configured to, in response to receiving one or more requests for a transmission ratio shift operation during the transmission ratio shift request time range, extend the transmission ratio shift request time range.

A technical benefit may include more efficient vehicle control with respect to performing transmission ratio shift operations. This is since the issuing of the transmission ratio engagement information to the vehicle to engage the target transmission ratio can be deferred such that there is time after each request to send a subsequent request. Such a subsequent request may be for example be needed to correct previous incorrect inputs or as to perform further transmission ratio shift operations. A result is that a total time for engaging the target transmission ratio is reduced since a plurality of requests may be considered before selecting the target transmission ratio.

Optionally in some examples, including in at least one preferred example, the transmission comprises a gearbox. In these examples, each one of the different transmission ratios corresponds to a gear of the gearbox. The gear of the gearbox may be or correspond to a logical number or other symbol for representing a state of the transmission.

A technical benefit may include more efficient vehicle control with respect to performing transmission ratio shift operations. This is since each transmission ratio shift operation can efficiently indicate a gear or adjustment of a current gear of the gearbox. The transmission ratio can thereby be engaged according to a predefined manner with respect to the gears of the gearbox.

Optionally in some examples, including in at least one preferred example, the gearbox comprises two or more gearbox portions together achieving the gear of the gearbox and the transmission ratio shift preparation information comprises information indicative of that at least one gearbox portion should assume a gearbox portion gear.

A technical benefit may include more efficient vehicle control with respect to performing transmission ratio shift operations. This is since the gearbox portions, where applicable, can be engaged in advance, thereby reducing time in engaging the target transmission ratio.

Optionally in some examples, including in at least one preferred example, the processing circuitry is further configured to predict the gearbox portion gear of said at least one gearbox portion gear based on a current gear of the gearbox and based on the first request.

A technical benefit may include more efficient vehicle control with respect to performing transmission ratio shift operations. This is since the gearbox portions can be engaged in advance, thereby reducing time in engaging the target transmission ratio.

Optionally in some examples, including in at least one preferred example, the processing circuitry is further configured to, after the transmission ratio shift request time range and in response to determining that the vehicle is not correctly configured to engage the target transmission ratio, issue re-adjustment information to the vehicle indicative of that the vehicle should assume a transmission ratio engagement enabling condition in which engagement of the target transmission ratio is enabled.

A technical benefit may include more efficient vehicle control with respect to performing transmission ratio shift operations. This is since even if the prediction of the gearbox portion gear is incorrect, the target transmission ratio can still be engaged.

Optionally in some examples, including in at least one preferred example, the processing circuitry is further configured to receive the requests for a transmission shift operation by detecting an input to a user interface.

A technical benefit may include more efficient vehicle control with respect to performing transmission ratio shift operations. This is since a user can thereby efficiently control the transmission shift operation(s), and thereby the target transmission ratio, based on the user interface.

Optionally in some examples, including in at least one preferred example, the processing circuitry is further configured to receive the requests for a transmission shift operation by detecting an input to a user interface comprising one or more buttons for incrementing or decrementing a current transmission ratio of the transmission. In these examples, the processing circuitry is configured to receive a respective request for a respective transmission ratio shift operation indicative of a selected transmission ratio by receiving a signal from one of the one or more buttons.

A technical benefit may include more efficient vehicle control with respect to performing transmission ratio shift operations. This is since a user can thereby efficiently control the transmission shift operation(s), and thereby the target transmission ratio, based on the incrementing and/or decrementing transmission ratio by using the one or more buttons.

Optionally in some examples, including in at least one preferred example, the transmission ratio shift preparation information comprises information indicative of that the vehicle should disengage a clutch connected to a gearbox of the transmission.

A technical benefit may include more efficient vehicle control with respect to performing transmission ratio shift operations. This is since when the clutch is disengaged, this action is not needed to be performed when engaging the target transmission ratio, thereby reducing time for engaging the target transmission ratio.

Optionally in some examples, including in at least one preferred example, the transmission ratio shift preparation information comprises information indicative of that the vehicle should adjust a torque of an engine of the vehicle for allowing to shift a transmission ratio of the transmission.

A technical benefit may include more efficient vehicle control with respect to performing transmission ratio shift operations. This is since the torque can be adjusted earlier in time as a preparation step, thereby reducing time for engaging the target transmission ratio as this step is not needed to be performed later as part of engaging the target transmission ratio.

Optionally in some examples, including in at least one preferred example, the processing circuitry is configured to determine at least part of the transmission ratio shift preparation information based on any one of:
- a preset configuration indicative of preparatory operations to be performed by the vehicle,
- the request for a transmission shift operation indicative of a selected transmission ratio,
- a current transmission ratio,
- characteristics of the vehicle or the transmission, or
- a combination thereof.

A technical benefit may include more efficient vehicle control with respect to performing transmission ratio shift operations. This is since the transmission ratio shift preparation information can be more accurately determined such that as many operations as possible is performed when assuming the enabling condition is a condition of the vehicle. In particular, predicting or determining information indicative of that at least one gearbox portion should assume a gearbox portion gear may be more accurate based on any of the above information.

According to a second aspect of the disclosure, a control assembly configured to issue information to a vehicle is provided. The vehicle comprises a transmission adapted to assume each one of a plurality of different transmission ratios. The control assembly comprises a computer system according to the first aspect. The control assembly comprises a user interface which user interface preferably comprises one or more buttons for incrementing or decrementing a current transmission ratio of the transmission. The control assembly is adapted to issue a transmission ratio shift operation to the computer system in response to a detected operation of the user interface.

According to a third aspect of the disclosure, a vehicle is provided. The vehicle comprises a transmission adapted to assume each one of a plurality of different transmission ratios. The vehicle comprising and/or is configured to be controlled by the computer system according to the first aspect and/or the control assembly according to the second aspect.

According to a fourth aspect of the disclosure, a computer-implemented method for issuing information to a vehicle is provided. The vehicle comprises a transmission adapted to assume each one of a plurality of different transmission ratios.

The method comprises, by processing circuitry of a computer system, receiving a first request for a transmission ratio shift operation indicative of a selected transmission ratio.

The method comprises, by the processing circuitry, issuing transmission ratio shift preparation information to the vehicle indicative of that the vehicle should assume a transmission ratio engagement enabling condition in which engagement of the selected transmission ratio is enabled but the selected transmission ratio remains disengaged.

The method comprises, selecting a target transmission ratio on the basis of the selected transmission ratio and any set of second requests for a transmission ratio shift operation received during a transmission ratio shift request time range after the issuance of the transmission ratio shift preparation information.

The method comprises, after the transmission ratio shift request time range, issuing transmission ratio engagement information to the vehicle to engage the target transmission ratio.

Optionally in some examples, including in at least one preferred example, the method comprises, in response to receiving one or more requests for a transmission ratio shift operation during the transmission ratio shift request time range, extending the transmission ratio shift request time range.

Optionally in some examples, including in at least one preferred example, the transmission comprises a gearbox and wherein each one of the different transmission ratios corresponds to a gear of the gearbox. In some of these examples, the gearbox comprises two or more gearbox portions together achieving the gear of the gearbox. In these examples, the transmission ratio shift preparation information comprises information indicative of that at least one gearbox portion should assume a gearbox portion gear.

Optionally in some examples, including in at least one preferred example, the method comprising predicting the gearbox portion gear of said at least one gearbox portion gear based on a current gear of the gearbox and based on the first request.

Optionally in some examples, including in at least one preferred example, the method comprising, after the transmission ratio shift request time range and in response to determining that the vehicle is not correctly configured to engage the target transmission ratio, issuing adjustment information to the vehicle indicative of that the vehicle should assume a transmission ratio engagement enabling condition in which engagement of the target transmission ratio is enabled.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** illustrates a vehicle according to an example.
**FIG. 2** illustrates a transmission according to an example.
**FIG. 3** is a flow chart of a method according to an example.
**FIG. 4** illustrates a line diagram representing an example scenario.
**FIG. 5** is another view of **FIG. 1****,** according to an example.
**FIG. 6** is a flow chart of an exemplary method according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An example of a strategy for adjusting transmission ratios of transmission in response to two requests could possibly be in accordance with the following:
**1.** First request is registered,
**2.** Decide the first transmission ratio for the first request,
**3.** Perform shifting sequence to engage the first transmission ratio,
**4.** Second request is registered,
**5.** Decide the second transmission ratio for the second request, and
**6.** Perform shifting sequence to engage the second transmission ratio.

As the above strategy may be too slow and inefficient since all operations are performed in order which takes a long time, in particular if a user wants to reach the second transmission ratio as quickly as possible.

To arrive at an appropriate vehicle control, examples herein may instead relate to starting a shifting sequence independently of a requested or final gear. The shifting sequence may comprise engine torque ramp down and clutch disengagement. A final transmission ratio may later be decided depending on a first request and potential incoming second requests.

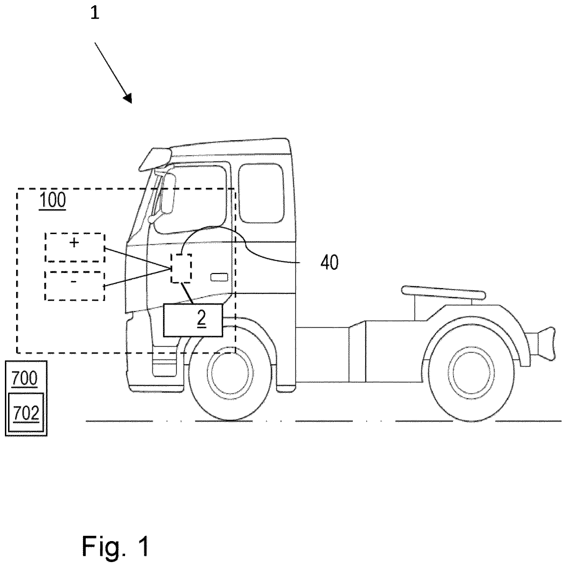

**FIG. 1** illustrates a **vehicle 1** as part of examples herein. While the vehicle 1 is illustrated as a truck in **FIG. 1****,** the vehicle 1 may be any suitable vehicle such as a car, a truck, a heavy-duty vehicle, a bus, a construction equipment, or a marine vessel.

The vehicle 1 comprises a **transmission 2** adapted to assume each one of a plurality of different transmission ratios. The transmission may relate to any suitable gearbox and the transmission ratios may correspond to different gears of the gearbox.

The vehicle 1 may comprise a user interface 40. The user interface 40 may be used for requesting transmission ratio shift operation(s) indicative of a selected transmission ratio. The requests performed using the user interface 40 may typically relate to incrementing or decrementing a current gear and/or changing a current transmission ratio by a set amount.

As a non-limiting example, the user interface 40 may comprise one or more buttons for incrementing or decrementing a current transmission ratio of the transmission 2.

As an alternative or addition, any other suitable interface may be used as part of the user interface 40 to input for adjusting a current transmission ratio of the transmission 2, e.g., an audio interface for voice control or a touch interface for touch control on a display.

The vehicle 1 comprises a **control assembly 100** configured to issue information to the vehicle 1 and/or one or more portions of the vehicle 1. The control assembly 100 comprises a computer system 700 as well as the user interface 40. The control assembly 100 is adapted to issue a transmission ratio shift operation to the computer system 700 in response to a detected operation of the user interface 40.

The computer system 700 comprises processing circuitry 702 therein. The computer system 700 and/or the control assembly 100 may or may not be part of an Electronic Control Unit (ECU) of the vehicle 1.

The computer system 700 and/or the control assembly 100 may be comprised in the vehicle 1 or may be remote to the vehicle 1.

The computer system 700 and/or the control assembly 100 may be communicatively connected with any suitable entity of the vehicle 1 and/or the transmission 2. The computer system 700 and/or the control assembly 100 may be capable of controlling any suitable entity or aspect of the vehicle 1 and/or the transmission 2.

In other words, the vehicle 1 may comprise and/or may be configured to be controlled by the computer system 700 and/or the control assembly 100.

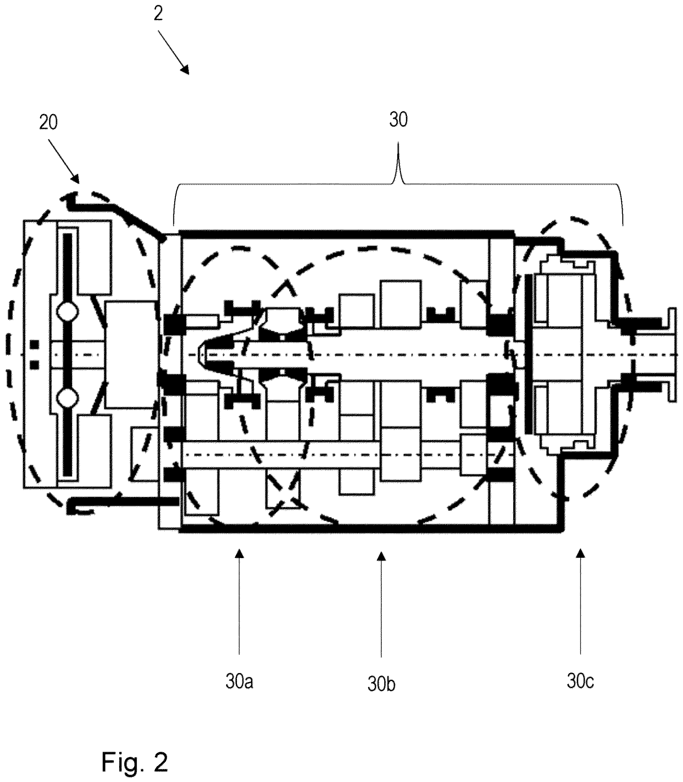

**FIG. 2** illustrates the transmission 2 according to an example.

The transmission 2 may comprise a gearbox 30. In these examples, each one of the different transmission ratios corresponds to a gear of the gearbox 30. The gear may be a logical gear, where a number or symbol associated with the gear corresponds to a set transmission ratio. For example, when including reverse and forward gears, the gears of the gearbox may, for an example truck, range from -4 to 12 where -4 may be a reverse gear and 12 may be a gear for use when travelling forward.

The gearbox comprises two or more gearbox portions 30a. 30b, 30c together achieving the gear of the gearbox 30. The gearbox portions may all affect a transmission ratio of the transmission 2.

The gearbox portions may comprise any suitable gearbox portions and every vehicle type and transmission may have different configurations of gearbox portions. In the example of **FIG. 2****,** the gearbox portions comprise a first portion 30a, a second portion 30b, and a third portion 30c. In this example, the first portion 30a comprises two speed synchronized splitter gears. The splitter gears may be used, e.g., as a first part of the gearbox 30, to adjust a transmission ratio by a set magnitude in order to reduce a number of gears in the gearbox 30. In this example, the second portion 30b comprises three speed unsynchronized general gears also referred to as main gears. The general or main gears may be used for adjusting the transmission ratio. In this example, the third portion 30c comprises two speed synchronized range gears. The range gears may be used for controlling a transmission with respect to an interval of the gear of the gearbox 30. For example, the range gears may control a transmission ratio depending on if the gearbox 30 has a current gear in a range belonging to a high or low predefined interval.

The transmission 2 may comprise a clutch 2. The clutch 20 may be connected to the gearbox 30 of the transmission 2.

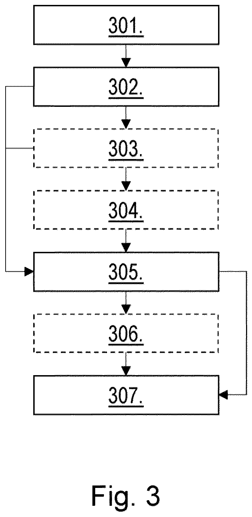

**FIG. 3** is a flow chart of a computer-implemented method for issuing information to the vehicle 1. The vehicle 1 comprises the transmission 2. The transmission 2 is adapted to assume each one of a plurality of different transmission ratios.

In some examples, the transmission 2 comprises a gearbox 30. In these examples, each one of the different transmission ratios may correspond to a gear of the gearbox 30. In a corresponding manner, each gear of the gearbox 30 may correspond to a respective transmission ratio of the plurality of different transmission ratios.

In some examples, as discussed with respect to **FIG. 2****,** the gearbox 30 may comprise two or more gearbox portions 30a, 30b, 30c together achieving the gear of the gearbox 30. Each transmission ratio or gear of the gearbox 30 may correspond to a joint configuration of the two or more gearbox portions 30a, 30b, 30c.

The method may be performed by the processing circuitry 702 of the computer system 700, and/or by the control assembly 100.

The method comprises the following actions which may be taken in any suitable order. Optional actions of the method may be indicated by dashed boxes in **FIG. 3****.**

### Action 301

The method comprises, receiving a first request for a transmission ratio shift operation indicative of a selected transmission ratio.

Receiving the request may comprise detecting an input to the user interface 40. The input may be a signal produced as a user, e.g., a driver or remote operator of the vehicle 1, interacts with the user interface 40.

The request may indicate a specific transmission ratio, or an increase or decrease in transmission ratio as compared to a current transmission ratio. The request may indicate a target gear of the gearbox 30, or a decrement or increment of a current gear of the gearbox 30.

Receiving the request for a transmission shift operation may comprise receiving a request for a transmission ratio shift operation indicative of the selected transmission ratio by receiving a signal from one or more buttons of the user interface 40.

### Action 302

The method comprises, issuing transmission ratio shift preparation information to the vehicle 1 indicative of that the vehicle 1 should assume a transmission ratio engagement enabling condition in which engagement of the selected transmission ratio is enabled but the selected transmission ratio remains disengaged.

The enabling condition may preferably allow for any transmission ratio to be engaged for the transmission 2 but wherein engagement of any transmission ratio is deferred until selecting a target transmission ratio for engagement as will be discussed with respect to actions below, in particular Action 305.

As a non-limiting example, the transmission ratio shift preparation information may comprise information indicative of that the vehicle 1 should disengage a clutch 20 connected to a gearbox 30 of the transmission 2. In this way, any further transmission ratio can be engaged in a reduced time as the clutch 20 is already disengaged.

As a non-limiting example, the transmission ratio shift preparation information may comprise information indicative of that the vehicle 1 should adjust a torque of an engine of the vehicle 1 for allowing to shift a transmission ratio of the transmission 2. In this way, any further transmission ratio can be engaged in a reduced time as the torque is already adjusted or the adjustment has at least been initiated and thereby reducing time for the adjustment procedure.

In some examples, transmission ratio shift preparation information comprises information indicative of that at least one gearbox portion should assume a gearbox portion gear.

The gearbox portions may in some examples only be partially possible to assume prior to selecting a target transmission ratio to engage.

Examples herein may comprise determining the at least part of the transmission ratio shift preparation information based on any one of:
- a preset configuration indicative of preparatory operations to be performed by the vehicle 1,
- the request for a transmission shift operation indicative of a selected transmission ratio,
- a current transmission ratio or a current gear of the gearbox 30,
- characteristics of the vehicle 1 or the transmission 2, or
- a combination thereof.

### Action 303

The method may comprise, in response to receiving one or more requests for a transmission ratio shift operation during the transmission ratio shift request time range, extending the transmission ratio shift request time range.

The one or more requests, e.g., also referred to as any set of second requests for transmission ratio shift operation, may be received as discussed with respect to action 301 above, such as by the user interface 40. For example, the user may press buttons several times to indicate that the user wants a change in transmission ratio corresponding to multiple increments of a current gear, where each button would indicate an increment of the current gear. The user may also correct previous input by pressing buttons for both indicating incrementing and decrementing current gear, such as if the user realize that buttons were pressed too many times to increment a gear.

The one or more requests may therefore be subsequent requests with respect to action 301, which requests are intended to further adjust the transmission ratio such that a target transmission ratio can be selected, when the transmission ratio shift request time range is expired.

Receiving the one or more requests may comprise receiving one or more respective requests for respective transmission ratio shift operations indicative of a respective selected transmission ratio by receiving a signal from one or more buttons of the user interface 40.

As requests keep being received during the transmission ratio shift request time range, the transmission ratio shift request time range may be extended since the user may still not have decided on which transmission ratio or gear of the gearbox 30 to engage. For example, the user may wish to increment or decrement the gear of the gearbox 30 multiple times which will result in multiple requests, and furthermore, the user may need to correct previous inputs, e.g., if requesting incorrect adjustments to the transmission ratio.

### Action 304

The method may comprise, predicting the gearbox portion gear of said at least one gearbox portion gear based on a current gear of the gearbox 30 and based on the first request.

For example, the at least one gearbox portion gear may be predicted by predicting an interval of a gear of the gearbox 30 to be engaged as part of selecting the target transmission ratio in action 305. The interval may be high or low, e.g., upper and lower half part of the logical gears of the gearbox 30. The interval may be predicted to be corresponding to the selected transmission ratio of action 301, i.e., based on the first request. Optionally the interval may also be predicted to be a selected transmission ratio of any requests received during the transmission ratio shift request time range. Accordingly, the at least one gearbox portion gear may then be determined for the predicted interval. This is since the at least one gearbox portion gear may be statically set for different intervals of gears of the gearbox 30.

In particular, the prediction of the at least one gearbox portion may comprise predicting one or more range gears of the gearbox 30, such as the third portion 30c, as discussed with respect to **FIG. 2****.**

### Action 305

The method comprises selecting a target transmission ratio on the basis of the selected transmission ratio and any set of second requests for a transmission ratio shift operation received during a transmission ratio shift request time range after the issuance of the transmission ratio shift preparation information. The selected transmission ratio may be the selected transmission ratio of action 301 and the set of second requests may be the requests of action 303. This means that the selected target transmission ratio may always account for the first request of action 301, and if received during the transmission ratio shift request time range, also account for any further requests. In an example scenario, a user may input multiple requests, e.g., three requests to increase a current transmission ratio such as by requesting to increment a gear by three gear steps.

The target selected transmission ratio may correspond to a gear of the gearbox 30 and optionally, when the gearbox 30 comprises the one or more gearbox portions, the target selected transmission ratio may correspond to a respective gearbox portion gear for each of the gearbox portions.

### Action 306

The method may comprise, after the transmission ratio shift request time range and in response to determining that the vehicle 1 is not correctly configured to engage the target transmission ratio, issuing adjustment information to the vehicle 1 indicative of that the vehicle 1 should assume a transmission ratio engagement enabling condition in which engagement of the target transmission ratio is enabled.

The adjustment information may for example comprise information of adjusting a configuration of the transmission 2 with respect to an incorrectly predicted gearbox portion gear.

This may be necessary if during the transmission ratio shift request time range, multiple requests are received which changed which gearbox portions gears are needed to be engaged, and hence, they may need to be adjusted after the transmission ratio shift request time range.

Since incorrectly predicting the gearbox portions gears is rare, and since the time spent performing the adjusting when necessary is negligible compared to a reduced time for the common case.

### Action 307

The method comprises, after the transmission ratio shift request time range, issuing transmission ratio engagement information to the vehicle 1 to engage the target transmission ratio.

Engaging the target transmission ratio may further comprise engaging the clutch 20 and/or adjusting a speed of an engine of the vehicle 1.

Engaging the target transmission ratio may comprise engaging a target gear of the gearbox 30, and in particular examples, engaging target gearbox portion gear of the two or more gearbox portions 30a, 30b, 30c.

The information may be determined based on, and/or be indicative of the adjustment target transmission ratio selected by action 305.

The information may further be determined based on, and/or be indicative of the adjustment information of action 306.

The information may be transmitted to the vehicle 1 and/or any control unit of the vehicle 1 in any suitable manner.

The transmission ratio engagement information may trigger the vehicle 1 or any suitable control unit thereof to engage the target transmission ratio for the transmission 2.

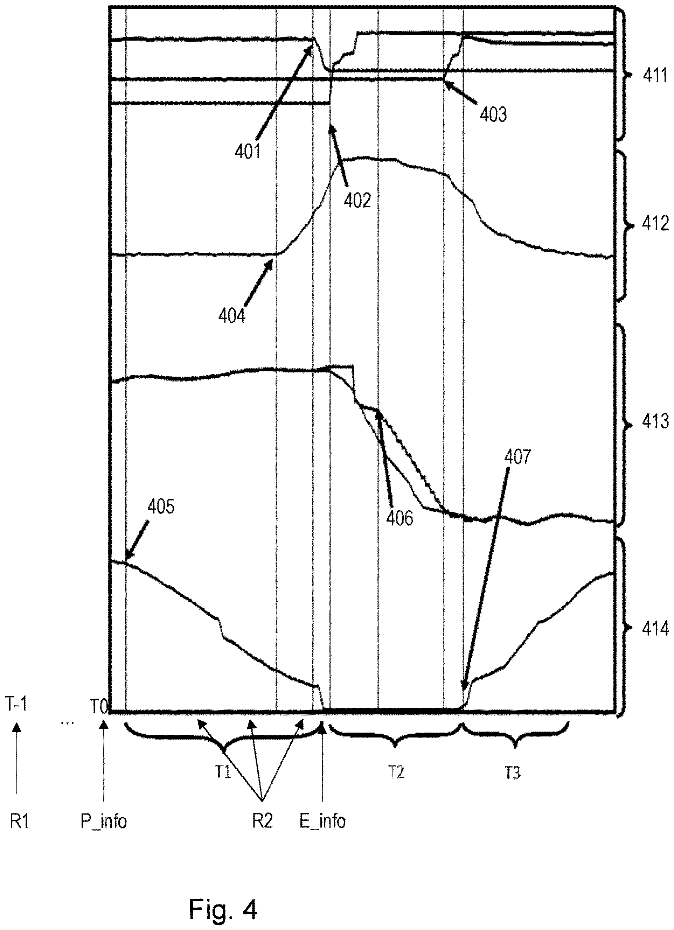

**FIG. 4** illustrates a line diagram representing an example scenario.

The X-axis of the example scenario of **FIG. 4** may reference time and in particular time periods for performing examples herein.

The Y-axis of the example scenario of **FIG. 4** may reference parameter changes such as speed, positions, and torque of entities of the vehicle 1, transmission 2, and/or the control assembly 100.

Examples herein may be initiated by the **first request R1,** e.g., as received in action 301. R1 may be received a **time T-1** at which time the transmission ratio shift preparation information may be determined.

At time **T0** the transmission ratio shift preparation information **P_info** may be transmitted to the vehicle 1. At this point in time, the vehicle 1 may initiate operations to assume the enabling condition, in which engagement of the selected transmission ratio is enabled but wherein the selected transmission ratio remains disengaged.

After the time T0, during **first time period T1** may occur in which a gear of the gearbox 30 is **adjusted 401** in position to neutral, and a torque of an engine of the vehicle 1 is **adjusted 405** such that the selected transmission ratio can be engaged.

The first time period T1 may relate to the transmission ratio shift request time range wherein second requests R2 may be received, e.g., as in action 303

Before the time periods T2 and T3, the transmission ratio engagement information **E_info** may be issued to the vehicle 1 such that the target transmission ratio will be engaged. This will cause the vehicle 1 to perform any necessary operations.

After the first time period T 1 and in response to the E_info, during a **second time period T2,** gearbox portions 30a, 30b, 30c, of the gearbox 30 are **moved 402** to their selected positions and a main gearbox portion of the gearbox 30 may be **synchronized 406** such that the gearbox portions are synchronized in speed.

After the second time period T2, during a third time period T3 and in response to the E_info, the clutch 20 may be **re-engaged 407** and engine torque may be readjusted.

For typical times relating to the example scenario, T1 may be 0,8 seconds, T2 may be 0,72 seconds, and T3 may be 0,42 seconds, resulting to 1,9 seconds for the procedure of adjusting transmission ratio of the transmission 2 from receiving the first request and 1,14 seconds from receiving the last request. If receiving two requests, the time may still be the same for examples herein, but for traditional transmission systems, the time would be all of the time periods twice, i.e., 2.28 seconds. In other words, time for adjusting transmission ratio is significantly reduced by examples herein.

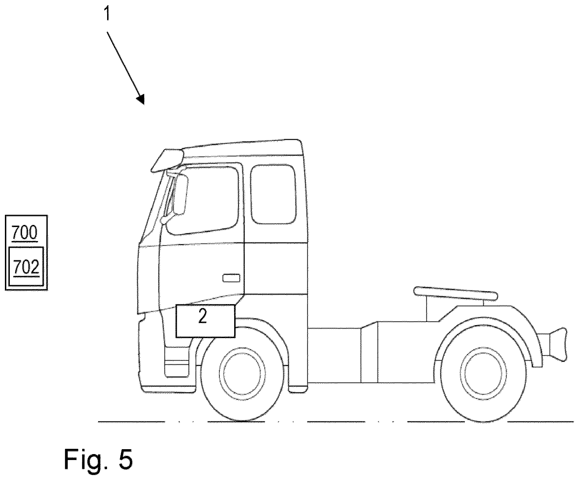

**FIG.** 5 is another view of **FIG. 1****,** according to an example.

The computer system 700 comprising the processing circuitry 702 is configured to issue information to the vehicle 1 comprising the transmission 2 adapted to assume each one of a plurality of different transmission ratios.

The processing circuitry 702 is configured to receive a first request for a transmission ratio shift operation indicative of a selected transmission ratio.

The processing circuitry 702 is configured to issue transmission ratio shift preparation information to the vehicle 1 indicative of that the vehicle 1 should assume a transmission ratio engagement enabling condition in which engagement of the selected transmission ratio is enabled but wherein the selected transmission ratio remains disengaged.

The processing circuitry 702 is configured to select a target transmission ratio on the basis of the selected transmission ratio and any set of second requests for a transmission ratio shift operation received during a transmission ratio shift request time range after the issuance of the transmission ratio shift preparation information.

The processing circuitry 702 is configured to, after the transmission ratio shift request time range, issue transmission ratio engagement information to the vehicle 1 to engage the target transmission ratio.

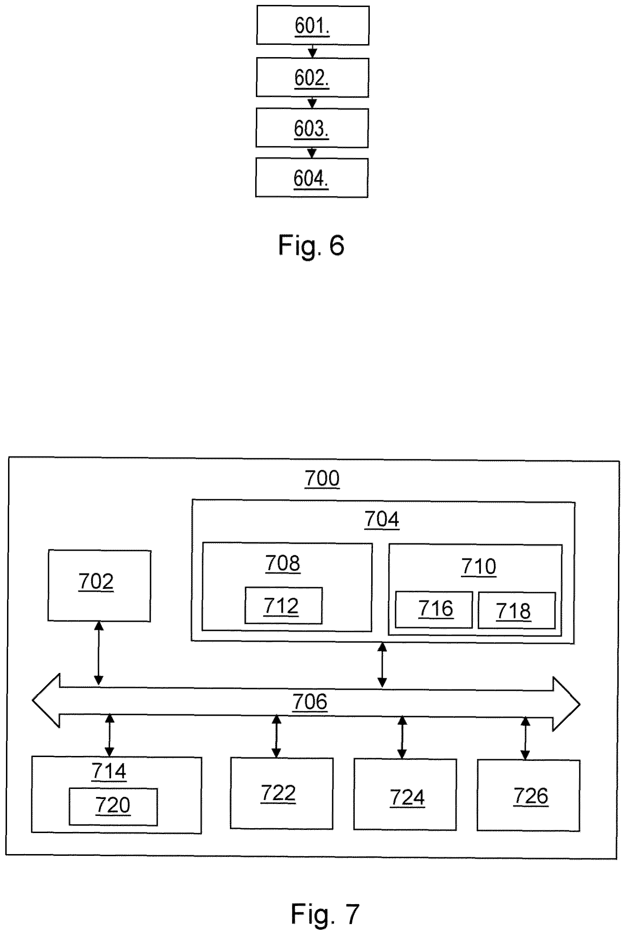

**FIG. 6** is a flow chart of a computer-implemented method for issuing information to the vehicle 1 according to an example. The vehicle 1 comprises the transmission 2 adapted to assume each one of a plurality of different transmission ratios. The method comprises the following actions. The method may be combined with any of the above or below examples in any suitable manner.

### Action 601

The method comprises by the processing circuitry 702 of the computer system 700, receiving a first request for a transmission ratio shift operation indicative of a selected transmission ratio.

### Action 602

The method comprises, by the processing circuitry 702, issuing transmission ratio shift preparation information to the vehicle 1 indicative of that the vehicle 1 should assume a transmission ratio engagement enabling condition in which engagement of the selected transmission ratio is enabled but the selected transmission ratio remains disengaged;

### Action 603

The method comprises, by the processing circuitry 702, selecting a target transmission ratio on the basis of the selected transmission ratio and any set of second requests for a transmission ratio shift operation received during a transmission ratio shift request time range after the issuance of the transmission ratio shift preparation information.

### Action 604

The method comprises, by the processing circuitry 702, after the transmission ratio shift request time range, issuing transmission ratio engagement information to the vehicle 1 to engage the target transmission ratio.

**FIG. 7** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A list of Examples 1-20 follows below, which Examples can be combined in any suitable manner with the above examples or with the attached claims.
**Example 1.** A computer system 700 comprising processing circuitry 702 configured to issue information to a vehicle 1 comprising a transmission 2 adapted to assume each one of a plurality of different transmission ratios, the processing circuitry 702 being configured to:
   - receive a first request for a transmission ratio shift operation indicative of a selected transmission ratio;
   - issue transmission ratio shift preparation information to the vehicle 1 indicative of that the vehicle 1 should assume a transmission ratio engagement enabling condition in which engagement of the selected transmission ratio is enabled but wherein the selected transmission ratio remains disengaged;
   - select a target transmission ratio on the basis of the selected transmission ratio and any set of second requests for a transmission ratio shift operation received during a transmission ratio shift request time range after the issuance of the transmission ratio shift preparation information, and
   - after the transmission ratio shift request time range, issue transmission ratio engagement information to the vehicle 1 to engage the target transmission ratio.
**Example 2.** The computer system 700 of Example 1, wherein the processing circuitry 702 further is configured to:
   - in response to receiving one or more requests for a transmission ratio shift operation during the transmission ratio shift request time range, extend the transmission ratio shift request time range.
**Example 3.** The computer system 700 of any of Examples 1-2, wherein said transmission 2 comprises a gearbox 30 and wherein each one of the different transmission ratios corresponds to a gear of the gearbox 30.
**Example 4.** The computer system 700 of Example 3, wherein the gearbox comprises two or more gearbox portions 30a. 30b, 30c together achieving the gear of the gearbox 30 and the transmission ratio shift preparation information comprises information indicative of that at least one gearbox portion should assume a gearbox portion gear.
**Example 5.** The computer system 700 of Example 4 wherein the processing circuitry 702 is further configured to predict the gearbox portion gear of said at least one gearbox portion gear based on a current gear of the gearbox 30 and based on the first request.
**Example 6.** The computer system 700 of any of Examples 1-5, wherein the processing circuitry 702 is further configured to, after the transmission ratio shift request time range and in response to determining that the vehicle 1 is not correctly configured to engage the target transmission ratio, issue re-adjustment information to the vehicle 1 indicative of that the vehicle 1 should assume a transmission ratio engagement enabling condition in which engagement of the target transmission ratio is enabled.
**Example 7.** The computer system 700 of any of Examples 1-6, wherein the processing circuitry 702 is further configured to receive the requests for a transmission shift operation by detecting an input to a user interface 40.
**Example 8.** The computer system 700 of any of Examples 1-7, wherein the processing circuitry 702 is further configured to receive the requests for a transmission shift operation by detecting an input to a user interface 40 comprising one or more buttons for incrementing or decrementing a current transmission ratio of the transmission 2, and where the processing circuitry 702 is configured to receive a respective request for a respective transmission ratio shift operation indicative of a selected transmission ratio by receiving a signal from one of the one or more buttons.
**Example 9.** The computer system 700 of any of Examples 1-8, wherein the transmission ratio shift preparation information comprises information indicative of that the vehicle 1 should disengage a clutch 20 connected to a gearbox 30 of the transmission 2.
**Example 10.** The computer system 700 of any of Examples 1-9, wherein the transmission ratio shift preparation information comprises information indicative of that the vehicle 1 should adjust a torque of an engine of the vehicle 1 for allowing to shift a transmission ratio of the transmission 2.
**Example 11.** The computer system 700 of any of Examples 1-10, wherein the processing circuitry 702 is further configured to determine at least part of the transmission ratio shift preparation information based on any one of:
   a preset configuration indicative of preparatory operations to be performed by the vehicle 1,
   the request for a transmission shift operation indicative of a selected transmission ratio,
   a current transmission ratio,
   characteristics of the vehicle 1 or the transmission 2, or a combination thereof.
**Example 12.** A control assembly 100 configured to issue information to a vehicle 1 comprising a transmission 2 adapted to assume each one of a plurality of different transmission ratios, the control assembly 100 comprising a computer system 700 of any of the preceding Examples as well as a user interface 40 preferably comprising one or more buttons for incrementing or decrementing a current transmission ratio of the transmission 2, the control assembly 100 being adapted to issue a transmission ratio shift operation to the computer system 700 in response to a detected operation of the user interface 40.
**Example 13.** A vehicle 1 comprising a transmission 2 adapted to assume each one of a plurality of different transmission ratios, the vehicle 1 comprising and/or is configured to be controlled by the computer system 700 of any of Examples 1-11 and/or a control assembly 100 of Example 12.
**Example 14.** A computer-implemented method for issuing information to a vehicle 1 comprising a transmission 2 adapted to assume each one of a plurality of different transmission ratios, the method comprising:
   - by processing circuitry 702 of a computer system 700, receiving 301, 601 a first request for a transmission ratio shift operation indicative of a selected transmission ratio;
   - by the processing circuitry 702, issuing 302, 602 transmission ratio shift preparation information to the vehicle 1 indicative of that the vehicle 1 should assume a transmission ratio engagement enabling condition in which engagement of the selected transmission ratio is enabled but the selected transmission ratio remains disengaged;
   - by the processing circuitry 702, selecting 305, 603 a target transmission ratio on the basis of the selected transmission ratio and any set of second requests for a transmission ratio shift operation received during a transmission ratio shift request time range after the issuance of the transmission ratio shift preparation information, and
   - by the processing circuitry 702, after the transmission ratio shift request time range, issuing 307, 604 transmission ratio engagement information to the vehicle 1 to engage the target transmission ratio.
**Example 15.** The method of Example 14, further comprising:
   - by the processing circuitry 702, in response to receiving one or more requests for a transmission ratio shift operation during the transmission ratio shift request time range, extending 303 the transmission ratio shift request time range.
**Example 16.** The method of Example 14 or 15, wherein said transmission 2 comprises a gearbox 30 and wherein each one of the different transmission ratios corresponds to a gear of the gearbox 30, and wherein the gearbox 30 comprises two or more gearbox portions 30a, 30b, 30c together achieving the gear of the gearbox 30, wherein the transmission ratio shift preparation information comprises information indicative of that at least one gearbox portion should assume a gearbox portion gear.
**Example 17.** The method of Example 16 further comprising:
   - by the processing circuitry 702, predicting 304 the gearbox portion gear of said at least one gearbox portion gear based on a current gear of the gearbox 30 and based on the first request.
**Example 18.** The method of any one of Examples 14-17, further comprising, by the processing circuitry 702, after the transmission ratio shift request time range and in response to determining that the vehicle 1 is not correctly configured to engage the target transmission ratio, issuing 306 adjustment information to the vehicle 1 indicative of that the vehicle 1 should assume a transmission ratio engagement enabling condition in which engagement of the target transmission ratio is enabled.
**Example 19.** A computer program product comprising program code for performing, when executed by the processing circuitry 702, the method of any of Examples 14-18.
**Example 20.** A non-transitory computer-readable storage medium comprising instructions, which when executed by the processing circuitry 702, cause the processing circuitry 702 to perform the method of any of Examples 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to issue information to a vehicle (1) comprising a transmission (2) adapted to assume each one of a plurality of different transmission ratios, the processing circuitry (702) being configured to:
- receive a first request for a transmission ratio shift operation indicative of a selected transmission ratio;
- issue transmission ratio shift preparation information to the vehicle (1) indicative of that the vehicle (1) should assume a transmission ratio engagement enabling condition in which engagement of the selected transmission ratio is enabled but wherein the selected transmission ratio remains disengaged;
- select a target transmission ratio on the basis of the selected transmission ratio and any set of second requests for a transmission ratio shift operation received during a transmission ratio shift request time range after the issuance of the transmission ratio shift preparation information, and
- after the transmission ratio shift request time range, issue transmission ratio engagement information to the vehicle (1) to engage the target transmission ratio.

2. The computer system (700) of claim 1, wherein the processing circuitry (702) further is configured to:
- in response to receiving one or more requests for a transmission ratio shift operation during the transmission ratio shift request time range, extend the transmission ratio shift request time range.

3. The computer system (700) of any of claims 1-2, wherein said transmission (2) comprises a gearbox (30) and wherein each one of the different transmission ratios corresponds to a gear of the gearbox (30), and preferably wherein the gearbox comprises two or more gearbox portions (30a. 30b, 30c) together achieving the gear of the gearbox (30) and the transmission ratio shift preparation information comprises information indicative of that at least one gearbox portion should assume a gearbox portion gear, and preferably wherein the processing circuitry (702) is further configured to predict the gearbox portion gear of said at least one gearbox portion gear based on a current gear of the gearbox (30) and based on the first request.

4. The computer system (700) of any of claims 1-3, wherein the processing circuitry (702) is further configured to, after the transmission ratio shift request time range and in response to determining that the vehicle (1) is not correctly configured to engage the target transmission ratio, issue re-adjustment information to the vehicle (1) indicative of that the vehicle (1) should assume a transmission ratio engagement enabling condition in which engagement of the target transmission ratio is enabled.

5. The computer system (700) of any of claims 1-4, wherein the processing circuitry (702) is further configured to receive the requests for a transmission shift operation by detecting an input to a user interface (40).

6. The computer system (700) of any of claims 1-5, wherein the processing circuitry (702) is further configured to receive the requests for a transmission shift operation by detecting an input to a user interface (40) comprising one or more buttons for incrementing or decrementing a current transmission ratio of the transmission (2), and where the processing circuitry (702) is configured to receive a respective request for a respective transmission ratio shift operation indicative of a selected transmission ratio by receiving a signal from one of the one or more buttons.

7. The computer system (700) of any of claims 1-6, wherein the transmission ratio shift preparation information comprises information indicative of that:
- the vehicle (1) should disengage a clutch (20) connected to a gearbox (30) of the transmission (2), and/or
- the vehicle (1) should adjust a torque of an engine of the vehicle (1) for allowing to shift a transmission ratio of the transmission (2).

8. The computer system (700) of any of claims 1-7, wherein the processing circuitry (702) is further configured to determine at least part of the transmission ratio shift preparation information based on any one of:
- a preset configuration indicative of preparatory operations to be performed by the vehicle (1),
- the request for a transmission shift operation indicative of a selected transmission ratio,
- a current transmission ratio,
- characteristics of the vehicle (1) or the transmission (2), or
- a combination thereof.

9. A control assembly (100) configured to issue information to a vehicle (1) comprising a transmission (2) adapted to assume each one of a plurality of different transmission ratios, the control assembly (100) comprising a computer system (700) of any of the preceding claims as well as a user interface (40) preferably comprising one or more buttons for incrementing or decrementing a current transmission ratio of the transmission (2), the control assembly (100) being adapted to issue a transmission ratio shift operation to the computer system (700) in response to a detected operation of the user interface (40).

10. A vehicle (1) comprising a transmission (2) adapted to assume each one of a plurality of different transmission ratios, the vehicle (1) comprising and/or is configured to be controlled by the computer system (700) of any of claims 1-8 and/or a control assembly (100) of claim 9.

11. A computer-implemented method for issuing information to a vehicle (1) comprising a transmission (2) adapted to assume each one of a plurality of different transmission ratios, the method comprising:
- by processing circuitry (702) of a computer system (700), receiving (301, 601) a first request for a transmission ratio shift operation indicative of a selected transmission ratio;
- by the processing circuitry (702), issuing (302, 602) transmission ratio shift preparation information to the vehicle (1) indicative of that the vehicle (1) should assume a transmission ratio engagement enabling condition in which engagement of the selected transmission ratio is enabled but the selected transmission ratio remains disengaged;
- by the processing circuitry (702), selecting (305, 603) a target transmission ratio on the basis of the selected transmission ratio and any set of second requests for a transmission ratio shift operation received during a transmission ratio shift request time range after the issuance of the transmission ratio shift preparation information, and
- by the processing circuitry (702), after the transmission ratio shift request time range, issuing (307, 604) transmission ratio engagement information to the vehicle (1) to engage the target transmission ratio.

12. The method of claim 11, further comprising:
- by the processing circuitry (702), in response to receiving one or more requests for a transmission ratio shift operation during the transmission ratio shift request time range, extending (303) the transmission ratio shift request time range.

13. The method of claim 11 or 12, wherein said transmission (2) comprises a gearbox (30) and wherein each one of the different transmission ratios corresponds to a gear of the gearbox (30), and wherein the gearbox (30) comprises two or more gearbox portions (30a, 30b, 30c) together achieving the gear of the gearbox (30), wherein the transmission ratio shift preparation information comprises information indicative of that at least one gearbox portion should assume a gearbox portion gear, and preferably wherein the method further comprises:
- by the processing circuitry (702), predicting (304) the gearbox portion gear of said at least one gearbox portion gear based on a current gear of the gearbox (30) and based on the first request.

14. A computer program product comprising program code for performing, when executed by the processing circuitry (702), the method of any of claims 11-13.

15. A non-transitory computer-readable storage medium comprising instructions, which when executed by the processing circuitry (702), cause the processing circuitry (702) to perform the method of any of claims 11-13.
